# EUROPEAN PATENT SPECIFICATION

(11) **EP 3 516 473 B1**
(45) Date of publication and mention of the grant of the patent: **20.09.2023**
(21) Application number: 17852474.0
(22) Date of filing: 21.09.2017
(51) Int. Cl.: G05D 23/19, A61H 33/06, G08B 21/18, G01N 27/04, G01N 27/12, G01N 27/22, G01N 27/60, G01J 5/10, G08B 17/12

(54) **METHOD AND EQUIPMENT FOR CONTROLLING SAUNA STOVE**
VERFAHREN UND VORRICHTUNG ZUR STEUERUNG EINES SAUNAOFENS
PROCÉDÉ ET ÉQUIPEMENT PERMETTANT DE COMMANDER UN POÊLE DE SAUNA

(30) Priority: 22.09.2016 FI 20165714
(43) Date of publication of application: 31.07.2019
(73) Proprietor: Yli-Kovero, Risto Tapio, 13100 Hämeenlinna (FI)
(72) Inventor: Yli-Kovero, Risto Tapio, 13100 Hämeenlinna (FI)
(74) Representative: Espatent Oy
(86) International application number: PCT/FI2017/050663
(87) International publication number: WO 2018/055236

(56) References cited:
- EP-A1- 0 203 293
- DE-A1- 3 843 341
- DE-A1- 3 843 341
- DE-A1-102007 005 603
- DE-A1-102007 005 603
- DE-C1- 19 539 348
- DE-C1- 19 539 348
- FI-B- 85 330

## Description

### TECHNICAL FIELD

The invention relates to controlling sauna stove. Particularly, but not exclusively, the invention relates to increasing error resilience of stove control and/or simplifying of installation.

### BACKGROUND ART

This section illustrates useful background information without admission of any technique described herein representative of the state of the art.

In known stoves, a thermal cutoff is a mechanical, capillary or a thermal fuse. It breaks a circuit when overheating occurs. The thermal cutoff may be reversible in which case resetting by a user or replacement of the thermal cutoff switch resumes operation. As a mechanical device, the thermal cutoff is prone for mechanical failure particularly in difficult conditions of a sauna. If, for example, a mechanical thermal cutoff jams, the fail state cannot be automatically detected and the stove is left unprotected against overheating.

Small stoves for mainly domestic use have a thermal cutoff in the stove. The thermal cutoff is positioned external to the stove in case of large saunas, where electric supply can be controlled from a control center outside of the sauna and the thermal cutoff switch is wired to the external control center outside of the sauna.

EP0203293A1 discloses a sauna stove having heating control based on two different sensors, one of which is drawn above the stove and used in PI control for proportional control and the other one of which is drawn close to sauna bench and used in PI control for integrating control. In starting to heat sauna, this publication controls stove so that temperature would be initially kept near at a maximum temperature. A need for thermal cutoff is further disclosed as a legal requirement for switch off the stove if temperature in the sauna exceeds 140 degrees.

It is an object of the present invention to enhance sauna stove control or improve resilience of stove control or the simplicity of installation or to at least provide a new technical alternative for control of the stove.

### SUMMARY

According to a first aspect of the invention, a control equipment of a sauna, steam sauna or sauna stove is implemented. The control equipment comprises a thermal cutoff

The thermal cutoff comprises a temperature sensor for control of heating of the stove and a parallel temperature sensor. The control equipment is arranged to recognize an overheating situation from that a temperature measured by the thermal cutoff exceeds a pre-set limit value.

Using two temperature sensors, both temperature control of the sauna and thermal cutoff of the stove can be taken care of without a failure sensitive mechanical protection switch. This is more reliable than using a mechanical thermal cutoff. Thanks to thermal cutoff implemented with temperature sensors, an overheating situation can be easily and conveniently reset from outside the sauna. A mechanical thermal cutoff can also be damaged and inoperable not known by anyone, whereas measurement information is received all the time with which information a failure state could be easily observed. Also otherwise the operation of temperature sensors is more reliable, as the operation of typical sensors is based on reaction of a semiconductor without physical movement.

The control equipment may be arranged to receive from a user said limit value, that is at most a maximum set for the device. Thus it can be made possible to quickly and easily define a suitable thermal cutoff for the own needs of the user and the targeted use without risking reliability and safety of the thermal cutoff.

The control equipment may be arranged to compare deviation between the temperature sensor that controls the heating of the stove and the parallel temperature sensor and to detect a failure situation when the deviation exceeds a given deviation limit. With the two temperature sensor operating in parallel security level of the thermal cutoff can thus be increased. The parallel temperature measurement improves failure resilience by preventing most failure situations, because the measurement results can be measured in real time and compared all the time. If the measurement results excessively deviate, the heating may be stopped or a failure alarm may be issued.

The control equipment may be arranged to cause terminating of the heating of the stove responsive to detecting said failure situation. The control center may also take care of power supply of the stove and in failure situation to cut the power supply or the control center may control a controllable contactor, relay or semiconductor switch in a separate power supply unit or in the stove.

The control equipment may be arranged to measure relative humidity of the sauna air and to compare the sauna temperature and relative humidity to each other and to control the operation of the stove or alarm functionality based on both temperature and humidity. The thermal cutoff may be adapted according to humidity thus also accounting for the humidity of air that is significant for the health of the users of the sauna.

The temperature sensor that controls the heating of the stove and the parallel temperature sensor may reside substantially in one measurement unit. With one unit the installation may be easily implemented using one cable or at least one cable route.

A sensor measuring relative humidity may also reside in the measurement unit.

The control equipment may comprise a processor in the stove and a processor outside the sauna. Between said processors there may reside only digital information relaying cabling. Information may be transferred between said processors only with data transfer modulated to mains electricity. So doing may minimize cabling required by the control equipment. The minimizing of the cabling required by the control center external to the stove and sauna both facilitates installation of the stove and its control equipment and improves error resilience by reducing potential failure sources.

The control equipment may be arranged to cause, responsively to detecting the overheating situation, terminating of the heating of the stove.

The control equipment may be arranged to cause, responsively to detecting the overheating situation, issue an alarm signal.

According to a second aspect there is provided a stove that comprises a control equipment according to any preceding embodiment.

The stove may comprise a fan configured to boost heat transfer from the stove to the sauna by blowing air through a stone space of the stove.

The stove may comprise a semiconductor control configured to control power of the stove resistors.

Some embodiments and advantages of the invention have been illustrated in the foregoing. Other embodiments and advantages will be disclosed by the following description and claims.

Embodiments in the present invention are disclosed in connection with some aspect or aspects only. A skilled person appreciates that any embodiment or individual part may be applied in the same and other aspects alone or in combination with other embodiments.

### BRIEF DESCRIPTION OF THE DRAWINGS

Some example embodiments of the invention will be described with reference to the accompanying drawings, in which:

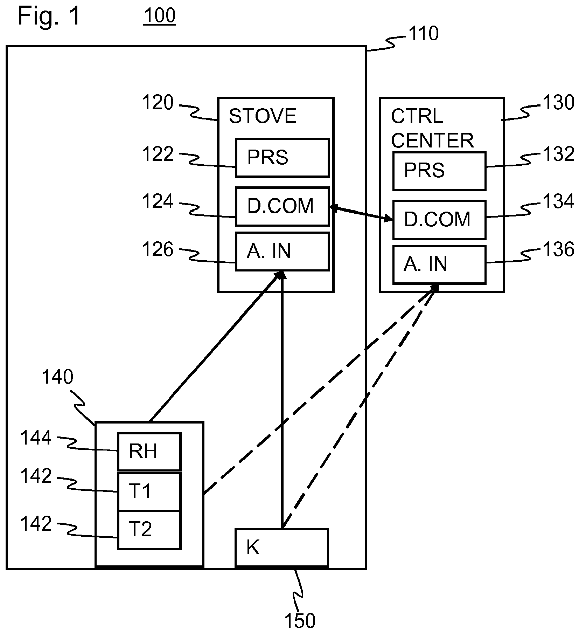

Fig. 1 shows a block diagram of a control equipment of a sauna, steam sauna or stove.

### DETAILED DESCRIPTION

In the following description, like reference signs denote like elements or steps. It should be noticed that the drawings are not entirely in scale and serve solely the purpose of demonstrating embodiments of the invention. The invention is defined by the appended claims.

Fig. 1 shows a block diagram of a system 100 to which belong a control equipment of a sauna, steam sauna or stove, the sauna bath room or in short sauna 110, stove opening button 140 that comprises two temperature sensors 142 and in this embodiment further a humidity sensor 144. The system 100 further comprises a stove 120 and inside the stove: a first processor 122, first digital data transfer means 124 and first analog inputs 126 for at least one temperature sensor 142 and humidity sensor 144. The system 100 comprises outside the sauna bath room a control center 130, that has a second processor 132, second digital data transfer means 134 and second analog inputs 136 for temperature sensors 142 and for a humidity sensor 144.

In Fig. 1, there connections are drawn with dashed line between the control center and the accessories positioned in the sauna bath room outside of the stove. In some embodiments, the control center has one or more connections and an analog input for receiving measurement information of sensors 142, 144 positioned in the sauna bath room and / or state information of the lid opening button 150. These analog connections can be avoided, if the stove digitizes analog data it receives and relays them digitally to the control center.

Fig. 1 data transfer connection between the control center 130 and the stove 120 is implementable with a data transfer cable or without separate cabling by means of powerline communications, PLC. Alternatively, wireless data transfer can be used such as using a short range radio link or links (WLAN or Bluetooth, for example). According to one embodiment, the control equipment protecting the stove against over heating comprises a thermal cutoff 140 and the control center 130. The control equipment is configured to identify an overheating situation from that that the temperature measured with the thermal cutoff exceeds a set limit value. The control equipment may also comprise a control unit (e.g. a first processor 122, first digital data transfer means 124) positioned in the stove.

With the control equipment of Fig. 1, the temperature of the sauna and/or the stove is/are measured with two mutually independent electric temperature sensors. One sensor measures the control temperature based on which the heating and other functions are controlled. The other sensor measures overheating temperature, the exceeding of which shuts down the stove and triggers other necessary actions. Alternatively, the control temperature measurement can be implemented using both sensors. For example, the measurements of both sensors can be performed separately and averaged, or the connection of the sensors can be alternated such that the sensors are at one moment connected in series or in parallel and produce one signal (e.g. a voltage or current signal) and at another moment, the outputs of the sensors are separately read for their comparison. As yet another alternative, the temperature can be measured alternatingly from different sensors with short intervals (e.g. 1 second or 10 seconds) and used as such or e.g. as a sliding average for the control temperature. With this alternative it is possible to simply multiplex one analog/digital converter for two or more sensors, for example also for a humidity sensor. The difference between different temperature sensors can be observed based on stored values without need for simultaneous input from different temperature sensors.

Commonly used sauna thermal cutoffs go off at a temperature of 110 °C -120 °C. This temperature is all too high, if the temperature set for the sauna is, for example, 80 °C. A lower overheating temperature spares in a failure situation the structures of the sauna from drying and also saves electricity, when the sauna in not heated in vain.

The user may set herself the desired overheating temperature programmatically below a set maximum temperature.

In an embodiment of the invention, the stove is so controlled that the sauna temperature is set to 80 °C and the overheating temperature is set to 90 °C exceeding which heating is stopped. The overheating temperature can also be set based on the set temperature of the sauna. The overheating temperature may be higher by a given overheating tolerance, such as 10 °C, than the set temperature. When the sauna temperature setting is decreased the overheating temperature can be decreased at a slowness suited for the cooling of the sauna so that if the sauna temperature setting is decreased with a drop greater than the overheating tolerance, the thermal cutoff would not go off.

With Fig. 1 control equipment it may be attempted to minimize cabling to improve failure resilience and/or facilitate installation. The cabling can be reduced using digital data transfer between the stove and the control center. This may be implemented using a data transfer cable or powerline communication.

In an embodiment, the control equipment comprises two processors, first of which is in the stove and the second outside the sauna. For data transfer, the control equipment may comprise for data transfer between the first and second processors via stove power supply e.g. powerline communication by modulating digital information into the power supply. The modulating is used herein as a generic term that contains all different ways to convey in same connector or connectors electric power for heating the stove and digital information between the processors. The digital transfer via power supply entirely removes the need for data transfer cabling between the stove and the control center.

Temperature measurement with two parallel temperature sensors prevents failure situations, because the measurement results can be measured in real time and compared all the time. If the measurement results too much deviate from each other, the heating can be stopped or a failure alarm be issued. This is more reliable that the use of a mechanical thermal cutoff. A mechanical thermal cutoff may be damaged and inoperative not known by anyone.

The failure situation can be identified also from that, if the temperature sensors' measurement deviates too much from ordinary. In this way, also a situation can be indicated in which a cabling of both temperature sensors has become cut or shortcircuited.

Into the thermal protection can be connected measurement of humidity. Then, for example, in the same thermal cutoff unit is added one or more humidity sensors.

The humidity sensor can be used for control of automatic throwing of water on the stove or control of a steam sauna. In one embodiment the humidity sensor is positioned in nexus with the thermal cutoffs whereby the humidity data travel along same cable or at least same route to the control center.

In one embodiment, the temperature and humidity data are programmatically combined and conclusions are made of the operation of the sauna or steam sauna based on a combination of the temperature and humidity information. For example, if the relative humidity of the air in a sauna in nearly 100 degrees exceeds 30 % - 40 %, the conditions in the sauna are life-threatening and the risk for scalds is great.

Storing of temperature and humidity data and displaying time series and modifying combined data out of combinations of temperature and humidity data further belongs to one embodiment. The control in question may have a separate display or the control may employ a display of another data mean, such as a computer.

With the arrangement of the invention, replacing or resetting of a thermal cutoff in a hot sauna is avoided.

In an embodiment, the control equipment is configured to enable local or distributed fire detection system. For example, an infrared temperature measurement may be provided with a wireless sensor. The sensor is mounted e.g. at 1.5 meters height that measures approximately the temperature in which the people in sauna would usually sit. The infrared sensor is directed e.g. to a surface of a ceiling, wall or other structure of or in the sauna above the infrared sensor to monitor temperature of said surface.

The infrared sensor can be connected to the stove with same cabling or dedicated cable. Alternatively, the infrared sensor can be connected to the control center.

The infrared sensor can be used for detection of overheating so an overheating situation is indicated by either the parallel temperature measurement or the infrared sensor reading exceeding a respective upper limit. Alternatively or additionally, the overheating situation can be detected using the parallel temperature measurement so that a correlation between the infrared sensor reading and the parallel temperature measurement is determined. Then the temperature of the surface measured by the infrared sensor is evaluated based on the parallel temperature measurement and the determined correlation and the overheating is determined to happen if the evaluated temperature exceeds a predetermined upper limit,

In an embodiment, the parallel temperature sensor comprises the infrared sensor. The determined correlation can then be used to evaluate from the infrared measurement a probable temperature at the temperature sensor. In this case, the two temperature sensors are of different types (e.g. one being a thermistor and one an infrared sensor). In result, the difference between the two measurements may depend on factors such as changes in ventilation, and steam emission of the sauna stove, for example. On analyzing the deviation between the two temperature measurements for thermal cutoff, this mechanism may be accounted for by varying the limit for the deviation by temperature, for example.

In an embodiment, the control center is configured to send an alarm message to a predefined address if the infrared sensor measurement indicates a risk that the sauna might catch fire. Such an alarm may be issued already much earlier than any smoke begins to form and thus before significant damage is caused to the sauna.

The foregoing description has provided by way of non-limiting examples of particular embodiments. It is clear to a person skilled in the art that the invention is not restricted to details presented in the foregoing, but that the invention can be implemented in other equivalent ways.

Some of the features of the afore-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A control equipment (122,124,126,130,140,150) of a sauna (100), steam sauna or sauna stove (120), wherein
the control equipment (122,124,126,130,140,150) comprises a thermal cutoff (122,126,140); and
the control equipment (122,124,126,130,140,150) is arranged to recognize an overheating situation from that a temperature measured by the thermal cutoff (122,126,140) exceeds a pre-set limit value; **characterized in that**:
the thermal cutoff (122,126,140) comprises a temperature sensor (142) and a parallel temperature sensor (142) for control of heating of the stove (120).

2. The control equipment according to claim 1, **characterized in that**:
the control equipment is arranged to control heating of the stove using the parallel temperature sensor to a set sauna temperature.

3. The control equipment (122,124,126,130,140,150) according to claim 1 or 2, **characterized in that** the control equipment (122,124,126,130,140,150) is arranged to receive from a user said limit value, that is at most a maximum set for the sauna (100, steam sauna or stove (120).

4. The control equipment (122,124,126,130,140,150) according to any one of preceding claims, **characterized in that** the control equipment (122,124,126,130,140,150) is arranged to compare deviation between the temperature sensor (142) that controls the heating of the stove (120) and the parallel temperature sensor (142) and to detect a failure situation when the deviation exceeds a given deviation limit.

5. The control equipment (122,124,126,130,140,150) according to claim 4, **characterized in that** the control equipment (122,124,126,130,140,150) is arranged to cause terminating of the heating of the stove (120) responsive to the detecting of said failure situation.

6. The control equipment (122,124,126,130,140,150) according to any one of preceding claims, **characterized in that** the control equipment (122,124,126,130,140,150) is arranged to measure relative humidity of the sauna (100) air and to compare the sauna (100) temperature and relative humidity to each other and to control the operation of the stove (120) or alarm functionality based on both temperature and humidity.

7. The control equipment (122,124,126,130,140,150) according to any one of preceding claims, **characterized in that** the temperature sensor (142) that controls the heating of the stove (120) and the parallel temperature sensor reside in one measurement unit.

8. The control equipment (122,124,126,130,140,150) according to claim 7,
**characterized in that**:
a sensor measuring relative humidity also resides in the measurement unit.

9. The control equipment (122,124,126,130,140,150) according to any one of preceding claims, **characterized in that** the control equipment (122,124,126,130,140,150) comprises an infrared sensor configured to measure and monitor a temperature of a surface in the sauna (100) preferably indicatively of potential fire risk.

10. The control equipment (122,124,126,130,140,150) according to claim 9, **characterized in that** the parallel temperature sensor comprises the infrared sensor.

11. A sauna stove (120), **characterized in that** the stove (120) comprises a control equipment (122,124,126,130,140,150) according to any one of preceding claims.

## Patentansprüche

1. Steuereinrichtung (122, 124, 126, 130, 140, 150) einer Sauna (100), Dampfsauna oder eines Saunaofens (120), wobei
die Steuereinrichtung (122, 124, 126, 130, 140, 150) eine thermische Abschaltung (122, 126, 140) aufweist;
und
die Steuereinrichtung (122, 124, 126, 130, 140, 150) derart gestaltet ist, dass sie eine Überhitzungssituation daran erkennt, dass eine durch die thermische Abschaltung (122, 126, 140) gemessene Temperatur einen voreingestellten Grenzwert überschreitet; **dadurch gekennzeichnet, dass**:
die thermische Abschaltung (122, 126, 140) einen Temperaturfühler (142) und einen parallelen Temperaturfühler (142) zur Regelung des Aufheizens des Ofens (120) aufweist.

2. Steuereinrichtung nach Anspruch 1, **dadurch gekennzeichnet, dass**:
die Steuereinrichtung derart gestaltet ist, dass sie unter Verwendung des parallelen Temperaturfühlers das Aufheizen des Saunaofens auf eine eingestellte Saunatemperatur regelt.

3. Steuereinrichtung (122, 124, 126, 130, 140, 150) nach Anspruch 1 oder 2, **dadurch gekennzeichnet, dass** die Steuereinrichtung (122, 124, 126, 130, 140, 150) derart gestaltet ist, dass sie den Grenzwert von einem Benutzer empfängt, wobei der Grenzwert höchstens einem für die Sauna (100), die Dampfsauna oder den Ofen (120) festgelegten Maximum entspricht.

4. Steuereinrichtung (122, 124, 126, 130, 140, 150) nach einem der vorstehenden Ansprüche, **dadurch gekennzeichnet, dass** die Steuereinrichtung (122, 124, 126, 130, 140, 150) derart gestaltet ist, dass sie eine Abweichung zwischen dem Temperaturfühler (142), welcher das Aufheizen des Ofens (120) regelt, und dem parallelen Temperaturfühler (142) vergleicht und einen Störungszustand erkennt, wenn die Abweichung eine bestimmte Abweichungsgrenze überschreitet.

5. Steuereinrichtung (122, 124, 126, 130, 140, 150) nach Anspruch 4, **dadurch gekennzeichnet, dass** die Steuereinrichtung (122, 124, 126, 130, 140, 150) derart gestaltet ist, dass sie das Aufheizen des Ofens (120) als Reaktion auf das Erkennen des Störungszustands beendet.

6. Steuereinrichtung (122, 124, 126, 130, 140, 150) nach einem der vorstehenden Ansprüche, **dadurch gekennzeichnet, dass** die Steuereinrichtung (122, 124, 126, 130, 140, 150) derart gestaltet ist, dass sie die relative Feuchtigkeit der Luft in der Sauna (100) misst und die Temperatur und die relative Feuchtigkeit in der Sauna (100) miteinander vergleicht und den Betrieb des Ofens (120) oder die Alarmfunktion basierend sowohl auf der Temperatur als auch auf der Feuchtigkeit regelt.

7. Steuereinrichtung (122, 124, 126, 130, 140, 150) nach einem der vorstehenden Ansprüche, **dadurch gekennzeichnet, dass** der Temperaturfühler (142), welcher das Aufheizen des Ofens (120) regelt, und der parallele Temperaturfühler in ein und derselben Messeinheit angeordnet sind.

8. Steuereinrichtung (122, 124, 126, 130, 140, 150) nach Anspruch 7, **dadurch gekennzeichnet, dass**:
ein Fühler, welcher die relative Feuchtigkeit misst, ebenfalls in der Messeinheit angeordnet ist.

9. Steuereinrichtung (122, 124, 126, 130, 140, 150) nach einem der vorstehenden Ansprüche, **dadurch gekennzeichnet, dass** die Steuereinrichtung (122, 124, 126, 130, 140, 150) einen Infrarotfühler aufweist, welcher dafür eingerichtet ist, eine Temperatur einer Fläche in der Sauna (100), welche vorzugsweise ein potenzielles Brandrisiko anzeigt, zu messen und zu überwachen.

10. Steuereinrichtung (122, 124, 126, 130, 140, 150) nach Anspruch 9, **dadurch gekennzeichnet, dass** der parallele Temperaturfühler den Infrarotsensor aufweist.

11. Saunaofen (120), **dadurch gekennzeichnet, dass** der Ofen (120) eine Steuereinrichtung (122, 124, 126, 130, 140, 150) im Einklang mit einem der vorstehenden Ansprüche aufweist.

## Revendications

1. Équipement de commande (122,124,126,130,140,150) d'un sauna (100), sauna à vapeur ou poêle de sauna (120), dans lequel l'équipement de commande (122,124,126,130,140,150) comprend un système de coupure thermique (122,126,140) ; et
l'équipement de commande (122,124,126,130,140,150) est conçu pour reconnaître une situation de surchauffe à partir du fait qu'une température mesurée par le système de coupure thermique (122,126,140) excède une valeur limite préétablie, **caractérisé en ce que** :
le système de coupure thermique (122,126,140) comprend un capteur de température (142) et un capteur de température parallèle (142) pour commander le chauffage du poêle (120).

2. Équipement de commande selon la revendication 1, **caractérisé en ce que** : l'équipement de commande est conçu pour commander le chauffage du poêle en utilisant le capteur de température parallèle à une température de sauna établie.

3. Équipement de commande (122,124,126,130,140,150) selon la revendication 1 ou 2, **caractérisé en ce que** l'équipement de commande (122,124,126,130,140,150) est conçu pour recevoir de la part d'un utilisateur ladite valeur limite qui se situe au plus à un maximum établi pour le sauna (100), le sauna à vapeur ou le poêle (120) .

4. Équipement de commande (122,124,126,130,140,150) selon l'une quelconque des revendications précédentes, **caractérisé en ce que** l'équipement de commande (122,124,126,130,140,150) est conçu pour comparer la déviation entre le capteur de température (142) qui commande le chauffage du poêle (120) et le capteur de température parallèle (142) et pour détecter une situation de défaillance lorsque la déviation excède une limite de déviation donnée.

5. Équipement de commande (122,124,126,130,140,150) selon la revendication 4, **caractérisé en ce que** l'équipement de commande (122,124,126,130,140,150) est conçu pour provoquer l'arrêt du chauffage du poêle (120) responsable de la détection de ladite situation de défaillance.

6. Équipement de commande (122,124,126,130,140,150) selon l'une quelconque des revendications précédentes, **caractérisé en ce que** l'équipement de commande (122,124,126,130,140,150) est conçu pour mesurer l'humidité relative de l'air du sauna (100) et pour comparer la température du sauna (100) et l'humidité relative l'une à l'autre et pour commander le fonctionnement du poêle (120) ou la fonctionnalité d'alarme en se basant à la fois sur la température et l'humidité.

7. Équipement de commande (122,124,126,130,140,150) selon l'une quelconque des revendications précédentes, **caractérisé en ce que** le capteur de température (142) qui commande le chauffage du poêle de sauna (120) et le capteur de température parallèle sont logés dans une unité de mesure.

8. Équipement de commande (122,124,126,130,140,150) selon la revendication 7, **caractérisé en ce que** : un capteur mesurant l'humidité relative se trouve aussi dans l'unité de mesure.

9. Équipement de commande (122,124,126,130,140,150) selon l'une quelconque des revendications précédentes, **caractérisé en ce que** l'équipement de commande (122,124,126,130,140,150) comprend un capteur d'infrarouges configuré pour mesurer et contrôler une température d'une surface dans le sauna (100) de préférence de manière à indiquer un risque de feu potentiel.

10. Équipement de commande (122,124,126,130,140,150) selon la revendication 9, **caractérisé en ce que** le capteur de température parallèle comprend le capteur d'infrarouges.

11. Poêle de sauna (120), **caractérisé en ce que** le poêle (120) comprend un équipement de commande (122,124,126,130,140,150) selon l'une quelconque des revendications précédentes.
